Europäisches Patentamt

European Patent Office

Office européen des brevets

(11) Publication number: **0 124 241**
**B1**

# EUROPEAN PATENT SPECIFICATION

(45) Date of publication of patent specification: **02.11.88**

(51) Int. Cl.⁴: **G 02 B 21/00**

(21) Application number: **84301963.9**

(22) Date of filing: **22.03.84**

(54) Microscope provided with automatic focusing device.

(30) Priority: **29.03.83 JP 53169/83**
**29.03.83 JP 53170/83**

(43) Date of publication of application:
**07.11.84 Bulletin 84/45**

(45) Publication of the grant of the patent:
**02.11.88 Bulletin 88/44**

(84) Designated Contracting States:
**DE FR GB**

(56) References cited:
**EP-A-0 088 985**
**EP-A-0 119 857**
**US-A-3 906 219**
**US-A-3 932 733**
**US-A-4 000 417**
**US-A-4 093 991**
**US-A-4 163 150**
**US-A-4 202 037**
**US-A-4 241 251**
**IEEE TRANSACTIONS ON BIOMEDICAL ENGINEERING, vol. BME-29, no. 2, February 1982, pp. 70-81, IEEE, New York, USA, I.T. YOUNG et al.: "SSAM: Solid-state automated microscope"**

(73) Proprietor: **OLYMPUS OPTICAL CO., LTD.**
**43-2, 2-chome, Hatagaya Shibuya-ku**
**Tokyo 151 (JP)**

(72) Inventor: **Kawasaki, Masami**
**Kureru Hachiouji 407 Hachiman-cho, 3-23**
**Hachiouji-shi Tokyo-to (JP)**

(74) Representative: **Woodin, Anthony John et al**
**Fitzpatricks Europe House Box No. 88 World Trade Centre East Smithfield**
**London E1 9AA (GB)**

(56) References cited:
**AUTOMATION, vol. 23, no. 12, December 1976, pp. 42-45, Cleveland, USA; R.E. STEVENS et al.: "The happy marriage of the microscope and electronics"**

## Description

This invention relates to a microscope having automatic focussing.

Microscopes with automatic focussing devices are known wherein focussing is achieved by measuring the distance between an objective and the surface of a sample with laser light. Also known are microscopes wherein focussing is achieved by measuring the said distance by the pressure variation of an air jet directed towards the sample surface from the proximate end of the objective. However, in these microscopes there exist the defects that, particularly in the case of a microscope for imaging living objects, the in-focus position will be shifted, for example, by a change in the thickness of the cover glass. Accurate focussing is therefore difficult to achieve and changes in the in-focus position also present a problem.

In an endeavour to overcome the aforesaid difficulties, a microscope having an image pickup device is known. In this case, focussing is possible only by means of a complicated microscope operation when conditions required for correct operation of the image pickup device are met. Thus, there exists the problem that the amount of the light projected as an optical image and the sensitivity (electric charge accumulating time) of the image pickup device must be properly matched, having due regard to the characteristics of the pick-up device employed. The amount of the light projected onto the image pickup device varies with the amount of the light emanating from the light source, the numerical aperture (NA value) of the objective to be used, the state of the sample, the switchover of the ND filters and the numerical value of the aperture stop. Therefore, there has been considered a focussing method wherein, in order to match the optical system to the electric charge accumulating time and the other characteristics of the image pickup device, the image signal obtained from the pick-up device is fed back to the pick-up device control circuit to adjust the characteristics and a fresh image signal is obtained. However, this method has the disadvantages of requiring repeated recyclings of the image signal leading to a long processing time, of not effectively using the dynamic range of the image pickup device and of error due to the fact that the S/N ratio of the image signal varies with the amount of the incident light.

There is also the general disadvantage in known focussing microscopes that, in the case of photographing by use of an objective of a low magnification, the depth of field on the sample side will be so deep that, if focussing is effected by observing through an eyepiece then, wherever the focal point may in fact be, the sample will be observed as if in-focus due to the inherent adjusting action of the eye but, on the other hand, the focal depth is so shallow on the image side that satisfactory focussing on the film surface is almost impossible to achieve.

A primary object of the present invention is to provide a microscope having automatic focussing and utilising an image pickup device wherein, in both observation and photographing, automatic focussing can be quickly achieved with high precision by a simple operation.

According to the invention, there is provided a microscope having an automatic focussing mechanism, a plurality of interchangeable objectives, a memory means having data stored therein relating to the characteristics of the said objectives, an adjustable light source, an adjustable field stop, an adjustable aperture stop, a plurality of interchangeable condenser lenses, a sample stage whose position relative to a selected objective is changeable and whereat a sample is to be illuminated for observation or photographing, a first control means associated with the selected objective for adjusting the light source and the stops and selecting the condenser lens in accordance with the stored data relating to the selected objective in order to provide optimum illumination for observation or photographing, a photo-electric image pickup device for focussing, and a second control means operative for focussing and which, when operated, causes the first control means to operate to re-adjust the optical system, in accordance with the stored data, in order to provide optimum illumination for the purpose of accurate focussing, which optimum illumination is achieved in particular by changing the magnification of the eyepiece to increase the resolving power of the microscope and by adapting the illumination to the dynamic range of the image pickup, and the first control means restoring the optical system to the adjusted condition for observation or photographing after focussing has been completed.

The image pickup device may be formed of a photodiode array, and is preferably a CCD element consisting of a plurality of picture elements, and said microscope further comprises a driving control means for driving said CCD element.

The microscope preferably includes storing means for storing data correcting the inhomogeneity of the illumination on the image pickup device depending on the illuminating system and the optical system selected. Conveniently, said storing means stores the image data initially obtained by said image pickup device with no sample on the stage positioned around in-focus position as reference values, and the image data obtained by said image pickup device with a sample on the stage positioned for focussing being calculated taking into account these reference values.

Preferably, manual adjusting means is provided for changing the automatic setting of the illuminating system by the first control means.

The microscope preferably includes sensors capable of detecting different positions of said stage, for example a standard position of said stage being set away from the theoretical in-focus position by a predetermined distance, in the direction away from said objective, the stage being held at said standard position whenever operating instructions for automatic focussing are issued and the stage is in a position different from the standard position in a direction away from said objective, a focussing operation being carried out when said stage reaches said standard position, and focussing being repeated while said stage is repositioned stepwise until the in-focus position is obtained. The said focussing operation is preferably carried out in two stages, the first stage being based on a comparison of the actual contrast value with a predetermined contrast value, the second stage being based on a comparison of two image portions passing through a chopper blade. Conveniently, the step distance repositioned by said stage corresponds to the focal depth of the selected objective. Preferably, an upper limit position and a lower limit position are provided for the repositioning of said stage including said standard position therebetween, and an indicating device being activated whenever said upper limit position or said lower limit position is detected by said sensors.

The microscope in accordance with the invention is exemplified in the following detailed description, making reference to the accompanying drawings, in which:—

Figure 1 is a schematic view showing one example of the basic optical system of a microscope to which the invention is applicable;

Figure 2 is a block diagram of a control system in accordance with the present invention, for the microscope shown in Figure 1;

Figure 3 is a detailed block diagram showing an embodiment of the control system for the microscope;

Figure 4 is an elevational view showing one example of an operating panel for the control system of Figure 3;

Figure 5 is a data table of objectives;

Figure 6 is a table showing combinations of objectives and condenser lenses;

Figure 7 is a table showing the F-numbers associated with different light paths;

Figure 8 is a block diagram of a stop control device;

Figures 9A and 9B are respectively a plan view and side view showing an example of ND-filter;

Figure 10 is a table showing light amount ratios achieved with different combinations of ND-filters;

Figure 11 is a table showing light amount ratios for different light paths;

Figure 12 is a table showing light amount ratios for different objectives;

Figure 13 is a table showing light amount ratios for different ND-filters;

Figures 14 and 15 are graphs showing respectively correcting data and correction coefficients of images projected onto the image pickup device;

Figure 16 is a flow chart relating to operation of the control system when the objective data are set;

Figure 17 is a block diagram showing another embodiment of the control system for automatic focussing;

Figures 18A and 18B are schematic views showing the principle of focussing by division of the pupil;

Figures 19A and 19B are graphs respectively showing the image data obtained by pupil division and the phase differences obtained by the correlative operation;

Figures 20A, 20B and 20C are explanatory views showing the respective operating positions of one embodiment of pupil dividing chopper;

Figure 21 is a graph showing outputs of the image pickup device;

Figure 22 is a flow chart showing a background data input process for automatic focussing;

Figure 23 is a view showing the standard position of a stage for supporting the sample;

Figure 24 is a flow chart depicting the operational process for achieving automatic focussing; and

Figure 25 is a diagram for explaining a method of obtaining the image contrast from image data.

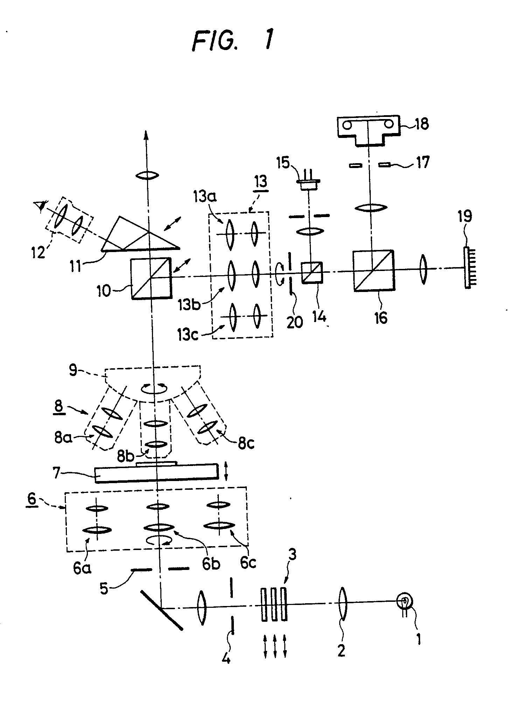

Figure 1 shows the optical system of a microscope to which the present invention is applied. The reference numeral 1 denotes a light source, for example a halogen lamp, 2 denotes a collector lens, 3 denotes an ND-filter unit consisting of a plurality of ND-filters for adjusting the amount of light without changing the colour temperature of the light source, 4 denotes a field stop, 5 denotes an aperture stop, 6 denotes a condenser lens unit consisting of a plurality of condenser lenses 6a, 6b and 6c which can be selectively inserted into the light path, 7 denotes a sample-supporting stage movable for focussing, 8 denotes an objective unit consisting of objectives 8a, 8b and 8c attached to a revolver 9, 10 and 11 denote beam splitters removably arranged in the light path to switch the light path to an observing system or to a photographing system, 12 denotes an optical eyepiece unit, 13 denotes a photographic eyepiece unit consisting of a plurality of photographic eyepieces 13a, 13b and 13c which can be selectively inserted into the light path, 14 denotes a beam splitter for directing a predetermined proportion of light to a light receiving element 15 for measuring the light received on said element 15 via an image forming lens and a slit which acts to remove unwanted light, such as that due to flare, in order to take a photograph, 16 denotes a beam splitter for directing light partly to the film surface within a camera 18, via an image forming lens and a camera shutter 17, and partly to an image pickup device 19 for detecting focussing, via another image forming lens, and 20 denotes a light bundle dividing chopper for use in automatic focussing. The image pickup device 19 for detecting focussing is a CCD element consisting of a large plurality of picture elements.

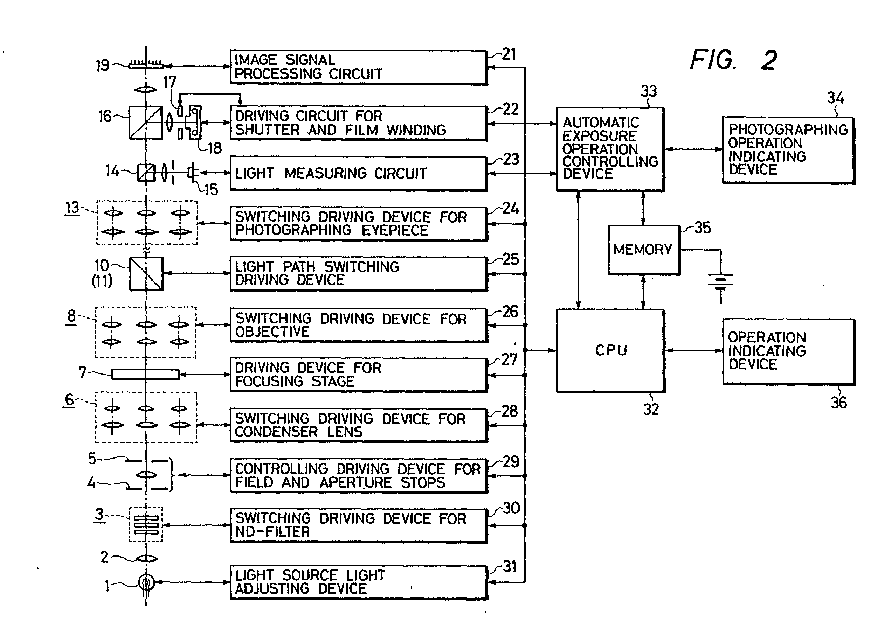

Figure 2 shows a control system for the optical arrangement of Figure 1. The reference numeral 21 denotes an image signal processing circuit for processing the output signal of the image pickup device 19, 22 denotes a camera control circuit for operating the shutter 17 in the case of photographing and for winding on the film, 23 denotes a light measuring circuit responsive to the output from the light receiving element for measuring the amount of light, 24 denotes an eyepiece-switching driving device for bringing any of the photographic eyepieces 13a, 13b and 13c into the light path, 25 denotes a light path-switching driving device for inserting and removing the beam splitters 10 and 11 into and out of the light path, 26 denotes an objective-switching driving device for bringing any of the objectives 8a, 8b and 8c into the light path, 27 denotes a driving device for vertically moving the movable stage 7, 28 denotes a lens-switching driving device for bringing any of the condenser lenses 6a, 6b and 6c into the light path, 29 denotes a stop-controlling driving device for adjusting opening of the aperture stop 5 and the field stop 4, 30 denotes a filter-switching driving device for switching the ND-filter 3 into or out of the light path and 31 denotes a light source adjusting device for adjusting the brightness of the light source 1.

The above-described driving devices 24 to 30 are each so arranged as also to be able to detect the state of the part of the optical system which it is switching or controlling.

The reference numeral 32 denotes a CPU including a sequence controlling unit and an arithmetic unit, 33 denotes a device controlling an automatic exposure operation, which device includes a microcomputer, 34 denotes an indicating device for a photographing operation, and provides an indication of film data and the state of various operating buttons such as a shutter release, and 35 denotes a memory unit for memorizing data relating to the objectives 8a, 8b and 8c, data relating to the film and image data to be used for automatic focussing, and this device has battery back-up to prevent loss of data in the event of power failure. The reference numeral 36 denotes an operation indicating device incorporating an operating switch required individually to operate the above-mentioned respective driving devices, an operating switch required for automatic focussing and an operating switch required to set the data relating to the objectives.

The operation of the above-described system is as follows. First, when power is switched on, a signal, relating to any one of the objectives 8a, 8b and 8c which has already been inserted into the light path, is put into the CPU 32, whereby data relating to the magnification and numerical aperture of said objective (stored in advance) is read out of the memory unit 35, and the condenser lens 6a, 6b or 6c most adapted to the said objective is selected and is inserted into the light path. At the same time, the correct stop values for the aperture stop 5 and field stop 4 are calculated in CPU 32 and the stop diameters are set. Further, the brightness of the light source 1 and the combination of the ND-filters 3 is selected on the basis of the data read out relating to the objective and the brightness of the observed visual field is set to a predetermined standard brightness. Thus, when the power is first switched on, the illuminating light is automatically set to a standard state.

Moreover, when the objective and photographing eyepiece are switched manually or by operating the operating switch button provided in the operation indicating device 36, such switching information will be put into the CPU 32 and the ND-filter 3, field stop 4, aperture stop 5 and condenser lens are again automatically set to obtain the above-mentioned standard brightness of the visual field.

Further, as the film data (such as ASA value) relating to the camera are stored in advance in the memory unit 35, as soon as the electric source is switched on, the data of the film is read out of the memory unit 35, the optimum shutter speed is calculated in the automatic exposure operation controlling device 33, the film data and shutter speed are indicated in the photographing operation indicating device 34 and, at the same time, the optimum exposure condition is determined.

On the other hand, when an image signal is put into the CPU 32 from the image pickup device 19 used for focussing, the CPU 32 causes the data of the objective located in the light path to be read out of the memory unit 35, the optical system to be adjusted for optimum conditions for focussing, and the in-focus state to be judged from said image signal, the stage 7 being moved by the driving device 27 to effect automatic focussing.

The above description is an outline of the arrangement and operation of the microscope in accordance with the present invention. A detailed embodiment of the microscope is more particularly explained in the following.

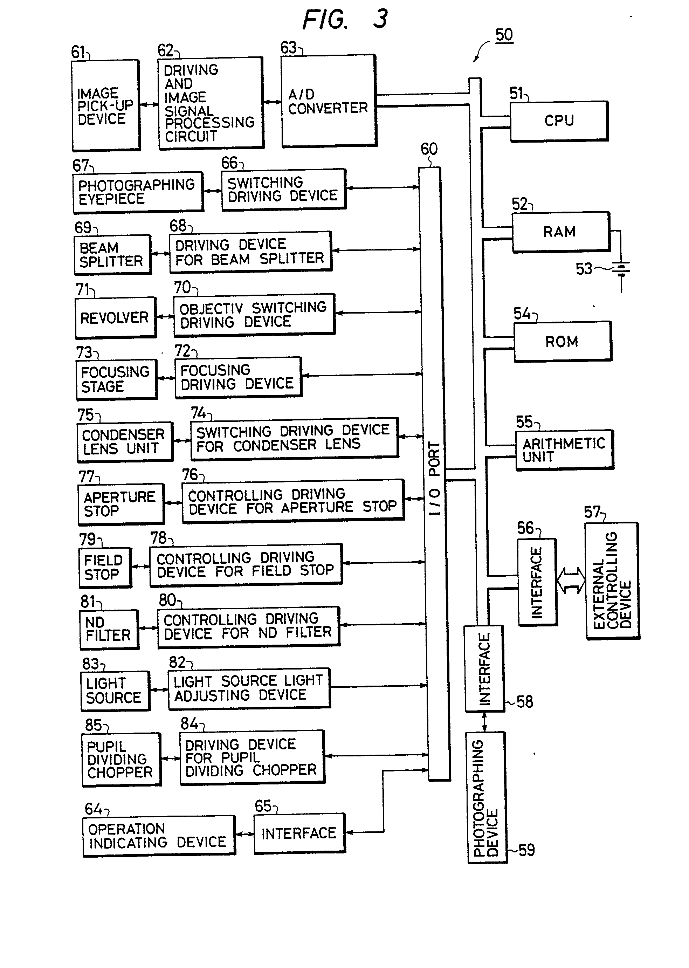

In Figure 3 showing a microscope controlling device 50, the reference numeral 51 denotes a CPU, 52 denotes a RAM backed up by a battery 53 to protect data against interruption of the power, 54 denotes a ROM used as a program memory, 55 denotes an arithmetic unit used to improve the precision of the operation and to reduce operation time, 56 denotes an interface for an external controlling device 57 used to control the controlling device 50 from outside, 58 denotes an interface for a photographing device 59, 60 denotes an I/O port for receiving and delivering the data and signals between later described various switching and control devices and the CPU 51, 61 denotes an image pickup device (multiple CCD element) for automatic focussing, 62 denotes a driving and image signal processing circuit for the image pickup device 61, 63 denotes an A/D converter, 64 denotes an operation indicating device including an operating switch button and indicator and used to put the input and output signals of the data relating to the objectives 8a, 8b and 8c and the control signals to the respective switching and control devices and the like into and out of the I/O port 60 through the interface 65, 66 denotes a driving device for switching the photographic eyepiece 67, and 68 denotes a driving device for a beam splitter 69 capable of switching the light path to the observation system or to photographic system, which device can simultaneously detect which of the light paths is selected and supply an appropriate detect signal to the CPU 51. The reference numeral 70 denotes an objective-switching driving device used to bring any of the objectives 8a, 8b and 8c into the light path by rotating a turret 71 and it can simultaneously detect the position of the turret 71, i.e. detect which of the objectives is inserted in the light path. The reference numeral 72 denotes a focussing driving device used to effect focussing by vertically moving a movable stage 73, 74 denotes a lens-switching driving device for switching a condenser lens unit 75 in response to the magnification of the objective inserted in the light path, 76 denotes a stop-controlling driving device for controlling the stop diameter of an aperture stop 77, 78 denotes a stop-controlling driving device for controlling the stop diameter of a field stop 79, 80 denotes an ND-filter-switching driving device for adjusting the transmitted amount of light by switching an ND-filter unit 81, 82 denotes a light source-adjusting device for adjusting the brightness of a light source 83, and 84 denotes a driving device for a pupil dividing chopper 85 used for automatic focussing.

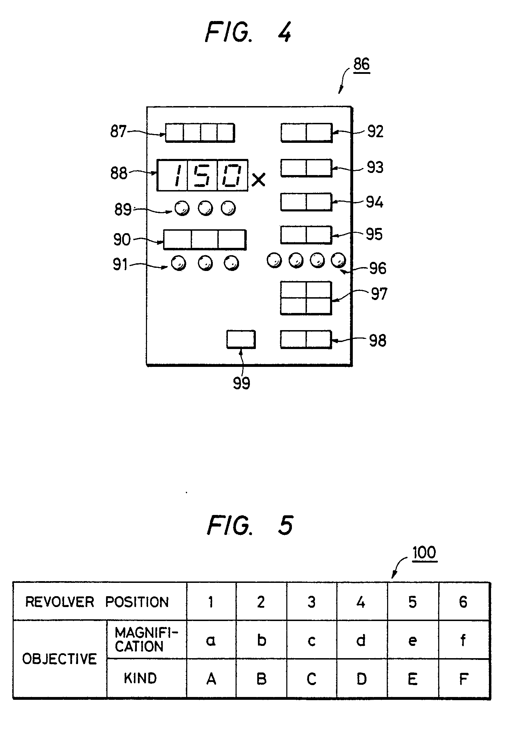

In Figure 4 showing an example of the operation indicating device 64, the reference numeral 86 denotes an operating panel, 87 denotes a switch button for entering the magnifications and kinds (such as SPLAN, SPLAN APO and DPLAN) of the respective objectives 8a, 8b and 8c, 88 denotes a magnification indicator for the objective inserted into the light path (or the objective selected for use). 89 denotes an indicator for the kind of objective inserted into the light path, 90 denotes a switch button for switching the light path to the observation system or the photographic system, 91 denotes an indicator for showing which light path is switched ready for use, 92 and 93 denote switching buttons respectively for manually adjusting the field stop 79 and aperture stop 77 to be of correct stop diameters, 94 denotes a switch button for adjusting the amount of light, 95 denotes a switch button for switching the magnification of the photographic eyepiece 67, 96 denotes an indicator for indicating the magnification of the photographic eyepiece inserted into the light path, 97 denotes a switch button for driving the movable stage 73 by means of the focussing driving device 72, 98 denotes a starting switch for rotating the turret 71, and 99 denotes a starting switch for starting an automatic focussing operation.

The operation of the above-described system is as follows. First, the action of setting the data of the objectives and the operations relating thereto are explained.

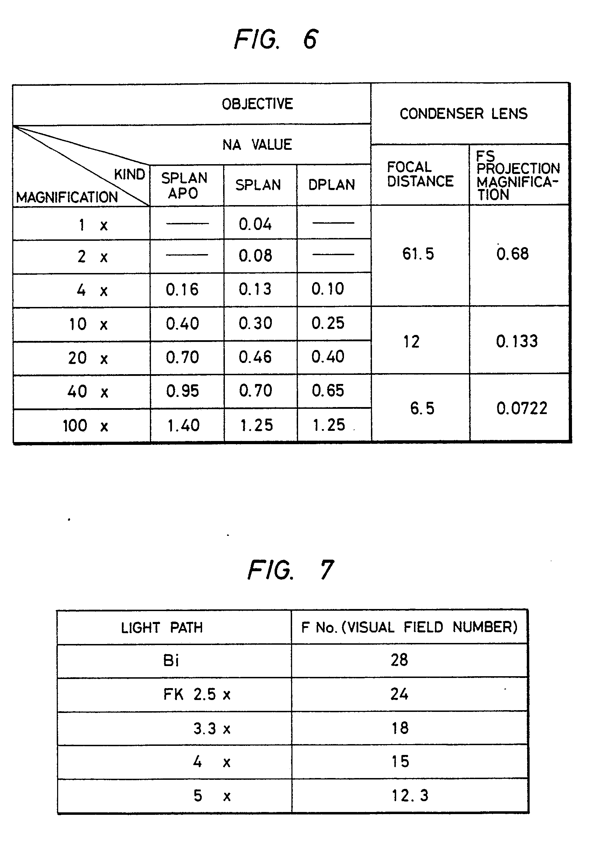

Assuming for example the case that the objective SPLAN of 10× is inserted into the light, path, when the button designating a magnification of 10× and the kind SPLAN among the switch buttons 87 is pushed on the operating panel 86, this information is put into the CPU 51 through the interface 65 and I/O port 60. The CPU causes the position of the turret to be read out of the objective-switching driving device 70, and a data table 100 (Figure 5) relating amongst others to the objective SPLAN of 10× magnification to be read out of the memory (this data table having been put in from the operating panel 86 and having been memorized by the RAM 52). This data table 100 will contain the position identification data of the turret 71 and the data of the magnification and kind of the objective corresponding to the turret positions. In the case of Figure 5, the data table 100 containing six turret position data and the data of the magnifications and kinds of the respective objectives corresponding to them will have been made and entered. The following operations and controls effected by the CPU will always be performed by monitoring this data table 100. Thus, the magnification of the condenser lens 75 adapted to the objective inserted into the light path will be determined from the table in Figure 6, in which combinations are theoretically determined in advance with reference to the table 100, a switching signal will be put out to the condenser lens switching driving device 74 and switching to the correct condenser lens will be performed. In the embodiment, the condenser lens 75 can be switched in three steps in response to the magnification of the objective. Then, in order further to set the observation condition, the stop diameters of the field stop 79 and aperture stop 77 will be respectively determined, as described below, according to the data table 100. First of all, the determination of the stop diameter of the field stop 79 is explained.

The stop diameter $d_1$ of the field stop 79 is calculated on the basis of the following formula:

$$d_1 = \frac{\text{F No. (Field number)}}{\text{Objective magnification} \times \text{FS projection magnification}} \times K1 \qquad (1)$$

where the F No. (Field number) is determined by whether the light path is switched to the observation system (Bi) or is switched to the photographic system (FK) as shown in the table in Figure 7 and will be further determined by the magnification of the photographic eyepiece 67 when the light path is switched to the photographic system. In addition, the FS projection magnification is determined by the magnification of the condenser lens 75 as shown in the table in Figure 6. K1 is a ratio to the visual field and, is K1=1, the value calculated by the formula (1) will give the stop aperture in external contact with the visual field. In this embodiment, when the data of the objective are set and when the power is switched on, the stop diameter $d_1$ of the field stop 79 will be determined with K1=1 and therefore, even if the light path is switched to the observation system or to the photographic system, the field stop will always be set by the formula (1) so as to be a stop aperture in external contact with the visual field.

The stop diameter $d_2$ of the aperture stop 77 is calculated by the following formula:

$$d_2 = NA \times 2 \times f \times K2 \qquad (2)$$

wherein NA is a value determined by the magnification and kind of the objective as shown in the table of Figure 6, f is the focal length of the condenser lens 75 determined likewise from the table of Figure 6, and K2 is a ratio to the pupil diameter. If K2=1, the value $d_2$ obtained from the formula (2) will give the same stop diameter as the pupil diameter. In this embodiment, when the data of the objective are set and when the power is switched on, with K2=0.8, the stop diameter $d_2$ of the aperture stop 77 will be initially set to be of a size 80% pupil diameter of the eyepiece, so as to be optimum at the time of observation.

The tables in Figures 6 and 7 are memorized in advance in the ROM 54.

In the example, where the object is the SPLAN of 10× magnification and the light path is switched to the observation system, the respective stop diameters $d_1$ and $d_2$ to be automatically set will be calculated as follows. F No.=28 and the FS projection magnification=0.133 will be obtained from the tables in Figures 6 and 7. If K1=1, from the formula (1)

$$d_1 = \frac{28}{10 \times 0.133} \times 1 \fallingdotseq 21.1 \text{ (mm), and}$$

in the same manner, from the table in Figure 6, NA=0.3 and f=12 will be obtained. If K2=0.8, from the formula (2),

$$d_2 = 0.3 \times 2 \times 12 \times 0.8 \fallingdotseq 5.8 \text{ (mm)}$$

will be obtained. The above calculation is performed by the CPU 51 and arithmetic unit 55. By the result of the calculation, the field stop 79 and aperture stop 77 are set with the above-mentioned stop diameters $d_1$ and $d_2$ through the field stop-controlling driving device 78 and aperture stop-controlling driving device 76.

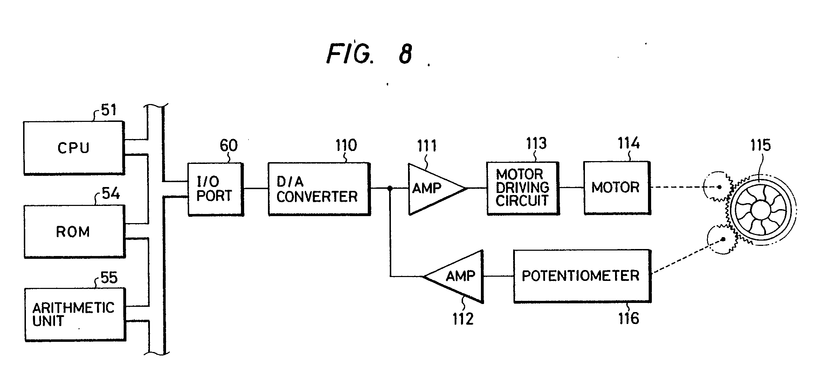

In Figure 8 showing an example of a controlling driving device for the field stop 79 or aperture stop 77, the reference numeral 110 denotes a D/A converter, 111 and 112 denote amplifiers, 113 denotes a motor driving circuit, 114 denotes a motor 115, denotes a geared stop mechanism capable of being opened and closed by the motor 114 and 116 denotes a potentiometer for detecting the operating position of the stop mechanism 115. Here, in the case of a digital conversion of 8 bits, if the adjustable range of the stop diameter calculated as described above is 0 to 34 mm,

$$\text{D/A data} = \text{Field stop diameter} \times 7.5$$

Thus,

$$\text{D/A data} = \frac{\text{F No. (Field number)}}{\text{Objective magnification} \times \text{FS projection magnification}} \times K1 \times 7.5 \qquad (3)$$

The resolving power will therefore be 0.13 mm/bit, and the data digital-converted to 8 bits is put into the D/A converter 110 through the I/O port 60 from the CPU 51, and converted to an analogue signal, which is amplified by the amplifier 111 to drive the motor 114 through the motor driving circuit 113, thus operating the stop mechanism 115 to adjust the stop diameter. However, as its operating position is always monitored by the potentiometer 116 and is fed back to the amplifier 111 through the amplifier 112, the stop aperture is precisely controlled to be of a predetermined stop diameter.

The automatic setting operation to obtain optimum brightness for observation when the objective data are set is explained in the following.

The illumination L on the image surface of light for observation is represented as follows:

$$L = LA \times ND \times AS \times Ob \times Bi \text{ (lx)} \qquad (4)$$

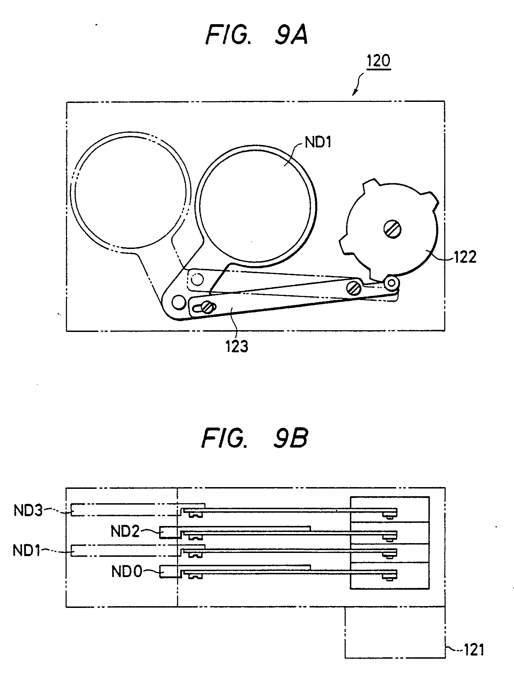

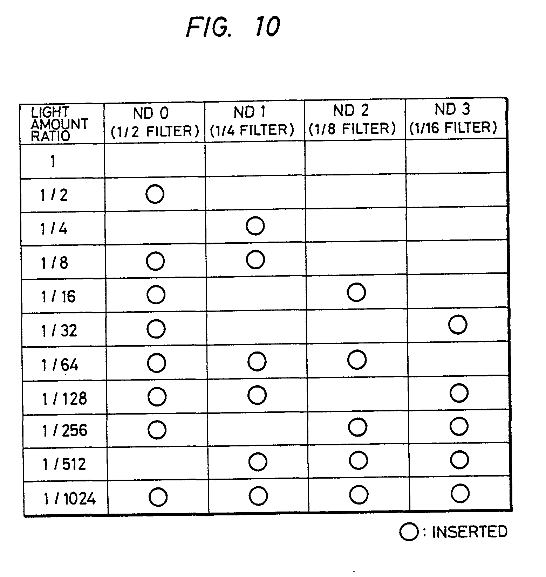

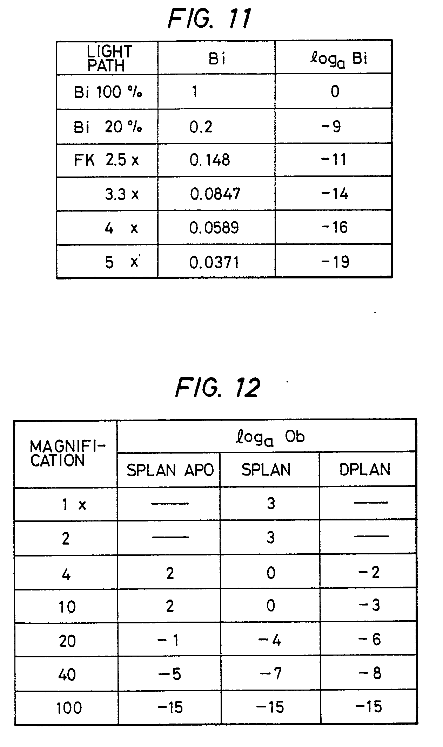

where ND is a light amount ratio given by the ND-filter unit 120, which is capable of changing the transmission factor by differing combinations of the four ND-filters ND0, ND1, ND2 and ND3 shown, for example, in Figures 9A and 9B. Filter selection is controlled in 11 steps, as shown in Figure 10, when each ND-filter is selectively inserted into the light path by a lever 123 driven by a cam 122 in turn driven by the motor 121. In Figures 9A and 9B, the filters ND0 and ND2 are inserted into the light path. Thus, from Figure 10, it can be seen that the light amount ratio ND=1/16 is given. AS is a brightness ratio of the aperture stop 77 and will be $0.8^2=0.64$ when the standard value is 80% pupil diameter, Bi is a light amount ratio when the light path of 100% Bi is made 1, as shown in Figure 11, Ob is a light amount ratio with reference to the magnification and kind of objective as shown in Figure 12, the light amount ratio Ob of the objective SPLAN of 10× being made 1 as a standard. LA is an illumination of the image surface in the light path of the objective SPLAN of 10×, light amount ratio ND=1, brightness ratio AS=1 and 100% Bi and, in this embodiment, LA=189 lx is predetermined for use as a constant. In this state, in order to always maintain the illumination of the image surface within the range of 0.5 to 1 lx, by the target value of

$$L = 0.5 \times \sqrt{2} \times 2^{\pm 1/2} = 0.707 \times 2^{\pm 1/2} \text{ (lx), from the formula (4)}$$

$$L = 189 \times 0.64 \times ND \times Ob \times Bi = 0.707 \times 2^{\pm 1/2}$$

therefore,

6

$$ND = \frac{0.707}{189 \times 0.64 \times Ob \times Bi} = \frac{5.84 \times 10^{-3}}{Ob \times Bi} \tag{5}$$

is obtained and the target value of the light amount ratio of the ND-filter is given. Now, as the ND-filter unit 120 is formed of a combination of four ND-filters, the target value of ND by the formula (5) must be given by the resolving power of $2^{1/4}$. Therefore, if a logarithm having $2^{1/4}$ at the bottom is taken into formula (5)

$$\log_a ND = -30 - \log_a Ob - \log_a Bi \tag{6}$$

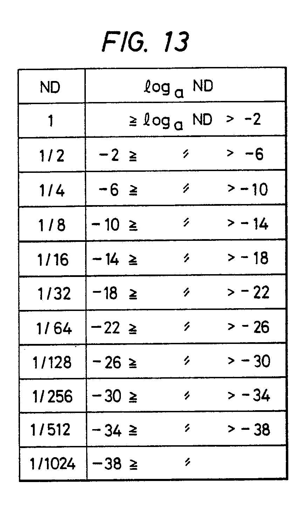

will be obtained. Therefore, in order to determine an actual combination of ND-filters, $\log_a Ob$ is determined in response to the objective from the table in Figure 12, also $\log_a Bi$ is determined from the table in Figure 11 and $\log_a ND$ is obtained from the formula (5). Thus, the light amount ratio ND is obtained on the basis of the table shown in Figure 13 in response to this $\log_a ND$ and the ND-filter which gives this light amount ratio is selected by the ND-filter switching driving device 80, in accordance with Figure 10.

The tables in Figures 10 to 13 are memorized in advance in the ROM 54 as data to be read out according to requirements. Here, in the case of a light path of the objective SPLAN of $10\times$ and observing system of 20% Bi, from the tables in Figures 11 and 12, $\log_a Bi = -9$ and $\log_a Ob = 0$ will be obtained from the formula (6), thence

$$\log_a ND = -30 - 0 - (-9) = -21$$

will be obtained, from the table in Figure 13 ND=1/32 will be obtained and, according to the table in Figure 10, if the ND-filters ND0 and ND3 are inserted into the light path, the correct brightness will be obtained. Therefore, when the CPU 51 puts out a signal to the ND-filter switching driving device 80 to insert the ND-filters ND0 and ND3 into the light path, the brightness of the observation system will be set at a predetermined optimum value.

Thus, there are performed a series of related operations at the time of setting the data of the objective. In the case of setting the data of a plurality of objectives, the above mentioned operations will be effected on each objective. Also, the set data of the objectives will be memorized in the RAM 52 together with the positions of the turret 71 (as the data table 100 in Figure 5) and, as the RAM 52 is backed up by the battery 53 even when the power source is interrupted, the data has to be set only once, when the microscope is first used. Further, as the data table 100 is memorized in the ram 52, for example, if the turret 71 is switched, the turret position will be detected by the switching driving device 70, the magnification and kind of the objective will be read out by the data table 100 and, by the CPU 51, an optimum combination of the condenser lens 75, stop diameters of the field stop 79 and aperture stop 77 and ND-filter unit 81 will be automatically determined by operating as described above or referring to the data of the table memorized in the ROM 54, and signals will be put out to the respective driving devices to automatically set the elements of the illuminating optical system. Not only at the time of switching the objective but also in the case of switching the light path of the observation system (Bi) and switching the photographic eyepiece 67, the above mentioned automatic setting will be performed in exactly the same manner, so that the observer is released from the complicated operation of setting up the microscope.

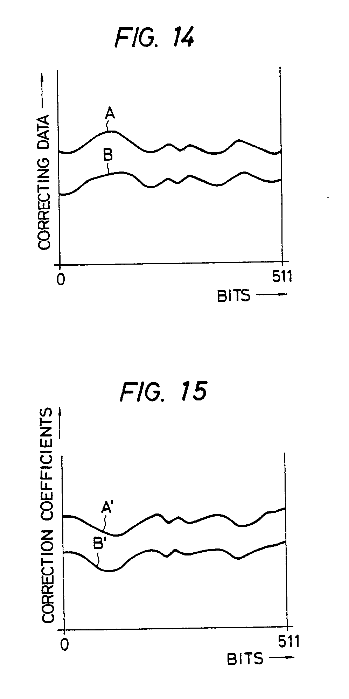

After the data are set and the related operations are performed as above described, background data of the optical system for automatic focussing will be put in to correct the unevenness of the illumination of the image projected onto the image pickup device 61, the inherent irregularity of the optical system and the noise pattern existing naturally in the image pickup device 61 under the state in which no sample is present on the stage 73 movable for focussing. Further, in the input sequence of this correcting data, the data of the ND-filter unit 81, field stop 79 and aperture stop 77 will be so set as to be entered as optimum projected image data associated with the data table 100 memorized in the RAM 52. Two sets of projected image data A and B, dividing the field in accordance with the action of the pupil dividing chopper 85 (Figure 14) are obtained at the output of the image pickup device 61 and are used as correcting data. In Figure 14, the x-axis represents bits (picture elements) of the image pickup device 61 and the y-axis represents output signals, that is, the light amounts of the respective bits. When the correction coefficients of the respective bits (picture elements) have been determined on the basis of this data (the correction coefficients A' and B' for the correcting data A and B are respectively represented as shown in Figure 15), then these correction coefficients A' and B' are put into the RAM 52 and are compared with the data table 100, the correction coefficients on the respective objectives being memorized in turn in the RAM 52.

In the case of automatic focussing, when image data is put in the CPU 51 from the image pickup device 61, the image data will be calculated by use of the correction coefficients to improve the precision of the image data for focussing. After this correcting data input sequence, the ND-filter 81, field stop 79 and aperture stop 77 will be set at the previously described values so determined as to respectively show the best conditions for the observation.

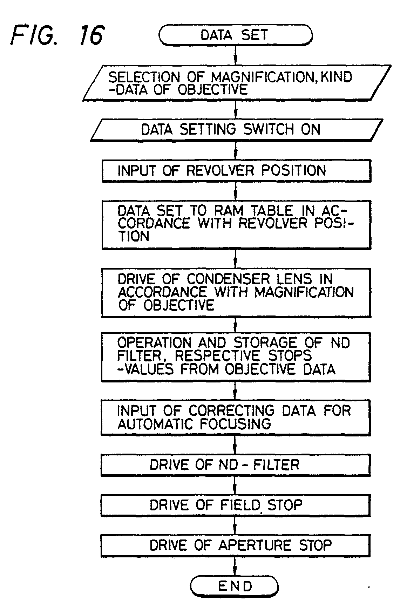

A summary of the above-described procedures is given in the flow chart of Figure 16.

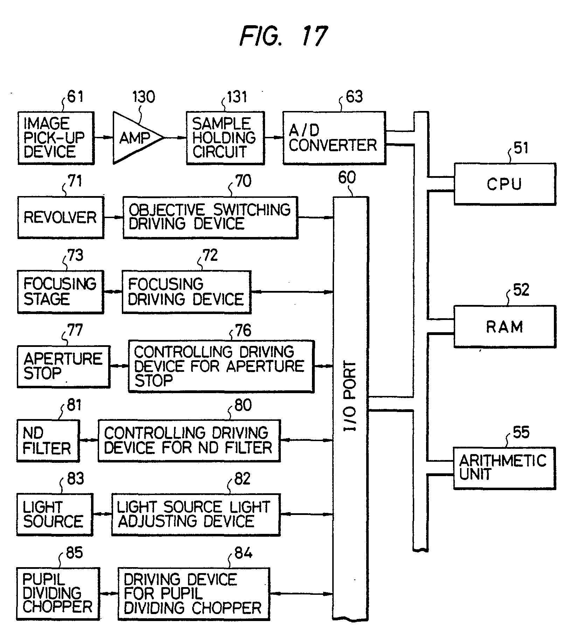

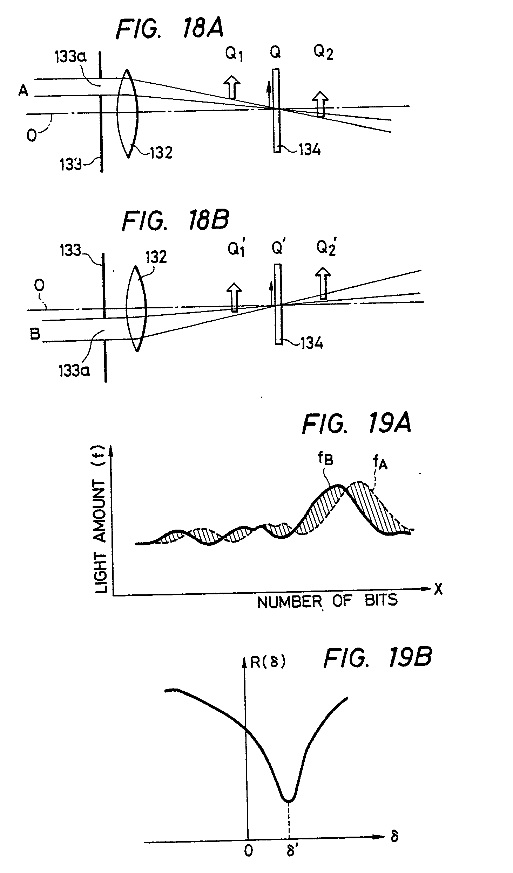

Automatic focussing procedure is now explained. In Figure 17, which is a block diagram of a controlling circuit part for automatic focussing, the reference numeral 130 denotes an amplifier and 131 denotes a sample holding circuit. An image signal for an image projected onto the image pickup device 61 is amplified by the amplifier 130, is converted from a picture element information signal of 512 bits to a digital signal by the A/D converter 63 through the sample holding circuit 131, is put into the CPU 51 and then memorized in the RAM 52. In this case, the image signal will be calculated by the arithmetic unit 55 with use of the correction coefficient (corresponding to the objective detected by the objective switching driving device 70) memorized in advance in the RAM 52 as described above and will then be memorized in the RAM 52. Further, when the pupil dividing chopper 85 arranged near the pupil position of the optical system is driven through the chopper driving device 84, the light bundle passing through the pupil position will be divided alternately into parts A and B, as shown in Figures 18A and 18B. Thus, the operation for in-focus computation will be performed by the arithmetic unit 55 on the basis of the image signal from the image pickup device 61 due to the light bundle parts A and B. As a result of the calculation, the movement of the stage 73 is determined and put into the CPU 51, thereby the CPU 51 drives the movable stage 73 to the in-focus position through the stage driving device 72.

The optical principle of focussing by dividing the pupil is now explained. In Figures 18A and 18B, the reference numeral 132 denotes an image forming lens, 133 denotes a light intercepting plate (constituting the pupil dividing chopper 85) having an aperture 133a arranged near the pupil in front of an image forming lens 132, and 134 denotes an image plane. In case the aperture 133a of the light intercepting plate 133 is in the position in Figure 18A, then when in focus, an image $Q$ will be formed on the image plane 134 but, when out of focus, unsharp images $Q_1$ and $Q_2$ will be formed in the positions on the image plane 134 displaced in the direction normal to the optical axis O with respect to the image $Q$. In case the aperture 133a of the light intercepting plate 133 is in the position in Figure 18B, when in focus, an image $Q'$ will be formed on the image plane 134 but, when out of focus, unsharp images $Q_1'$ and $Q_2'$ will be likewise formed. Thus, when the aperture 133a of the light intercepting plate 133 is rotated from the position in Figure 18A to the position in Figure 18B or vice versa, the images $Q$ and $Q'$ when in focus will not move at all but the images when out of focus will move from $Q_1$ to $Q_1'$ or vice versa, or from $Q_2$ to $Q_2'$ or vice versa, as a result. Therefore, when the image pickup device 61 is arranged on the image plane 134 and the movement of the image is detected, whether the focal point is before or behind the image plane when out of focus and the distance between the position of focal point and the image plane in such case is determinable. On the basis of this principle, the image signals relating to the two projected images divided by the pupil dividing chopper 85 are shown respectively by $f_A$ and $f_B$ in Figure 19A. A correlative calculation, in which $f_B$ is shifted by $\delta$ with respect to $f_A$, is performed by

$$R(\delta)= \sum_{x=n_1}^{n_2} ABS\{f_A(x)-f_B(x+\delta)\} \qquad (7)$$

from $f_A$ and $f_B$, and $\delta'$ (see Figure 19B) giving the minimum value of $R(\delta)$ will be a phase difference between the two projected images in this case. Here ABS $\{a\}$ represents an absolute value of $a$. The area of the part shown by the hatching in Figure 19A is represented by $R(O)$, where $\delta=0$ in the formula (7). Thus, automatic focussing will be performed by controlling $\delta'$ to be 0.

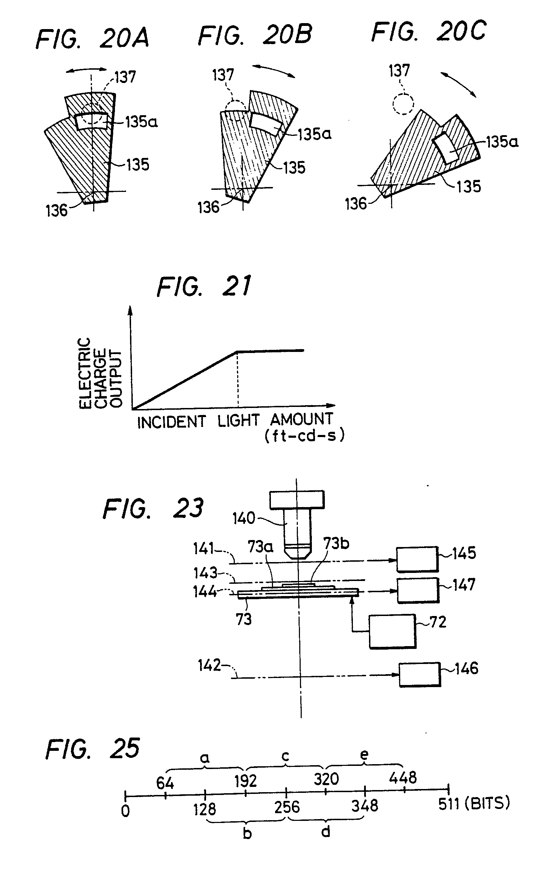

In Figure 20 showing an embodiment of the pupil dividing chopper 85, the reference numeral 135 denotes a chopper arranged rotatably around an axis of rotation 136. In the position in Figure 20A, only the light bundle passing through the lower half of the pupil 137 will pass through aperture 135a to reach the image pickup device 61. In the position in Figure 20B, only the light bundle passing through the upper half of the pupil 137 will pass through the outside of the chopper 135 to reach the image pickup device 61. Thus, the light bundle passing through the pupil part is divided. In case the light bundle is not to be divided, the entire chopper will be retracted outside the pupil 137, as shown in Figure 20C.

Further, in case a contrast value (later described) is to be determined, the chopper 135 may be set in the position in Figure 20A or 20B. In this embodiment, it is set in the position in Figure 20A. The image pickup device 61 is formed of a photodiode array consisting, for example, of 512 photodiodes operated in an electric charge accumulating mode and its output signal is proportional to the incident light amount (ft–Cd)×repeated scanning time (in seconds) as shown in Figure 21. This output signal has a saturation point. However, in order to give a correct light amount to the image pickup device 61, on the basis of the data table 100 relating to the objective, the CPU 51 controls the light adjusting circuit 82 for the light source 83 and the ND-filter unit switching driving device 80 and gives information of a proper repeated scanning time to the image pickup device driving and image signal processing circuit 62, so that the output signal is set at an optimum electric charge accumulating time.

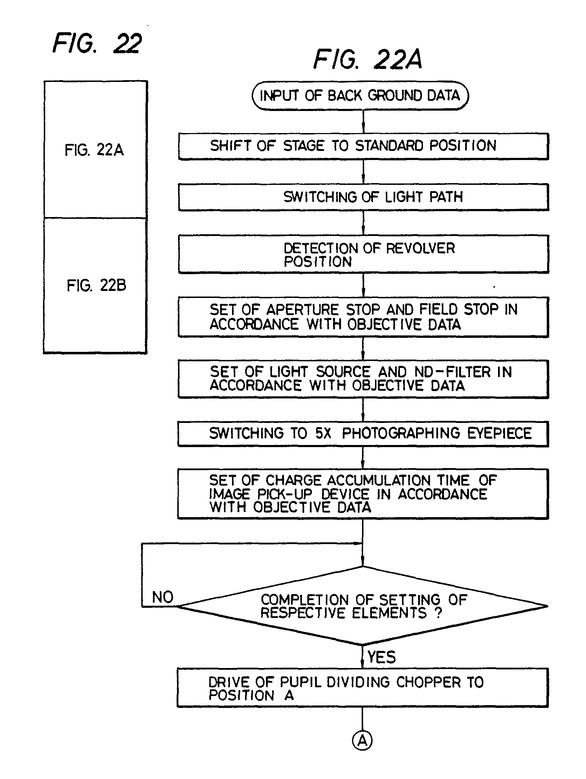

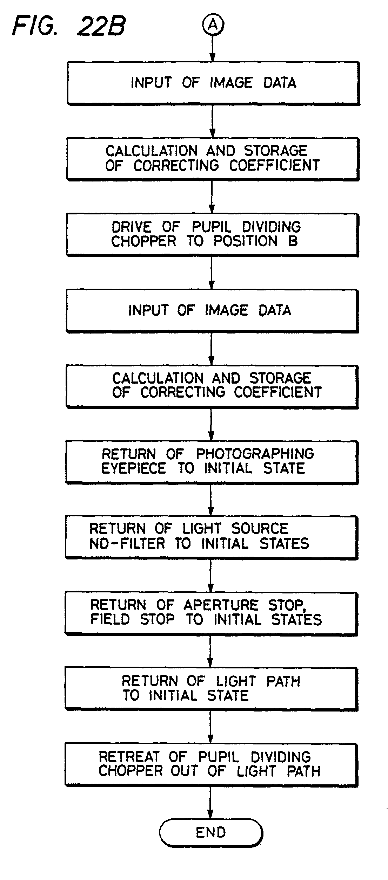

The background data input briefly described in the explanation of the automatic control of the illuminating optical system will now be explained in more detail with reference to the flow chart of Figure 22.

When the data of the objective inserted in the light path have been put in by the operating panel 64, so that a combination of the condenser lens most adapted to that objective, the appropriate stop diameters and ND-filters are obtained, then for focussing, the condenser unit 75, aperture stop 77, field stop 79 and ND-filter 81 will be switched and controlled and, at the same time, the input sequence of the background data will be started.

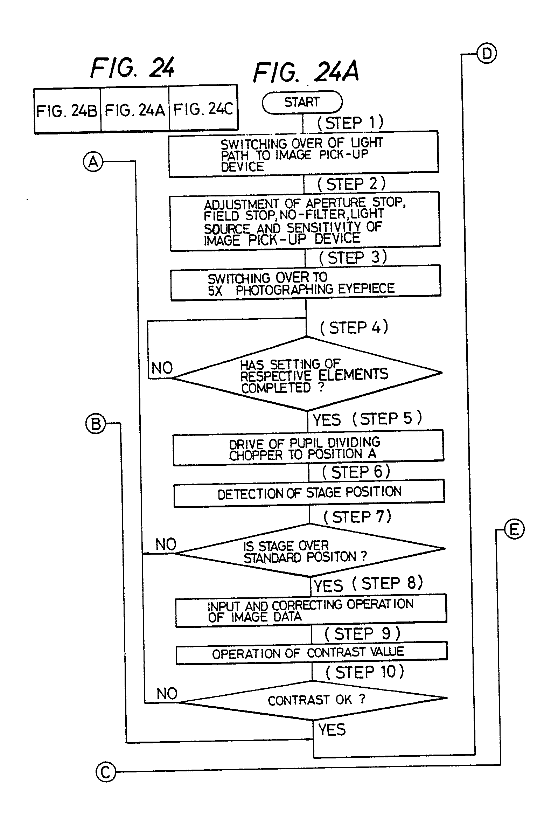

First of all, the movable stage 73 will be brought to the standard position set below the theoretical focus position by the stage driving device 72. This standard position is set in the following manner. In Figure 23, the reference numeral 140 denotes an objective, 141 denotes an upper limit position of the stage 73, 142 denotes a lower limit position of the stage 73, 143 denotes a theoretical focus position, 144 denotes a standard position located by the pre-supposed maximum thickness of the slide glass 73a and usual cover glass 73b below the focus position 143, and 145, 146 and 147 denote position sensors such as photosensors for detecting the respective positions 141, 142 and 144. When detection is being performed by the position sensor 147, if the stage driving device 72 is stopped, the stage 73 will be stopped in the standard position 144 and, even if the thicknesses of the cover glass 73b and slide glass 73a fluctuate, the position of the stage 73 to give the actual focus position will be always above the standard position 144. When the stage 73 is brought to the upper limit position 141 or lower limit position 142, the sensor 145 or 146 will detect it and stop the focussing driving device 72 and any out-of-focus condition will be indicated. As soon as the stage 73 is brought to the standard position 144, the beam splitter 16 (Figures 1 and 2) is switched to form a light path to the image pickup device 61.

Also, on the basis of the objective data, the aperture stop 77 and field stop 79 will be adjusted to be of optimum stop diameters by the respective controlling driving devices 76 and 78 and further, the light adjusting device 82 for the light source 83 and the switching driving device 80 for the ND-filter unit 81 will be operated to obtain an optimum light amount for the image pickup device 61. At the same time, the driving device 66 will be controlled so as to insert a photographic eyepiece of a magnification of 5 times into the light path. This particular photographic eyepiece 67 with a magnification of 5 times is selected to match the resolving power of the projected image to be formed on the image pickup device 61 to the resolving power of the image pickup device itself. The resolving power $\Delta x$ of the photographic eyepiece is represented by

$$\Delta x = \Delta Z \times NA = \frac{0.5\lambda}{NA}$$

where

$$\Delta Z = \frac{\lambda}{2NA^2} \text{(focal depth).}$$

In the case of 5-times magnification system, if NA on the rear side of the objective is made 0.04, then NA=0.008 on the image side of the 5-times magnification system. If $\lambda \fallingdotseq 0.5$, then $\lambda x$=31.25 ($\mu$m). If the pitch spacing of the arrangement of picture elements forming the image pickup device 61 is 28 $\mu$m, for example, then an image data resolving power sufficient for the projected image by the 5-times magnification system will be obtained.

Thus, after the photographic eyepiece 67 is switched to be of a magnification of 5 times, an electric charge accumulating time for the image pickup device, adapted effectively to use the dynamic range of said device, is calculated from the objective data and fed as control data to the driving and image signal processing circuit 62. After the CPU 51 confirms that the respective driving devices 66, 68, 74, 76, 78, 80 and 82 have correctly operated, the pupil dividing chopper 85 is driven to the first pupil dividing position (for example, the position in Figure 20A) by the chopper driving device 84 and the image data from the image pickup device 61 is processed by the CPU 51 and operating device 55 and is memorized in the RAM 52 as correction coefficients. Then, the chopper 85 is driven to the second pupil dividing position (for example, the position in Figure 20B) and the correction coefficients obtained at this time will be likewise memorized in the RAM 52. This can be done for each objective in case the objective is switched.

After the correction coefficients have been put into the RAM 52, the photographing eyepiece 67, light source 83, ND-filter unit 81, aperture stop 77, field stop 79 and beam splitter 16 are returned to their initial positions, i.e. the states set before the background data input operation, and the chopper 85 is retracted out of the light path (to be in the position shown in Figure 20C). When the background data input sequence is carried out in the above manner, the image data of the sample image obtained for automatic focussing (described hereinafter) will be calculated and processed by the correction coefficients memorized as background data and automatic focussing of high precision becomes possible.

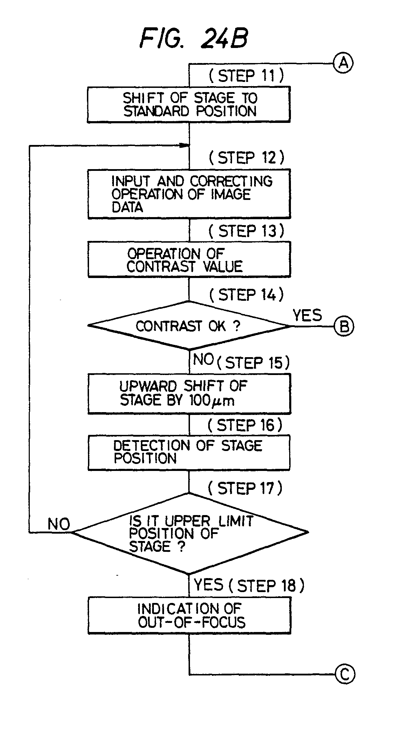

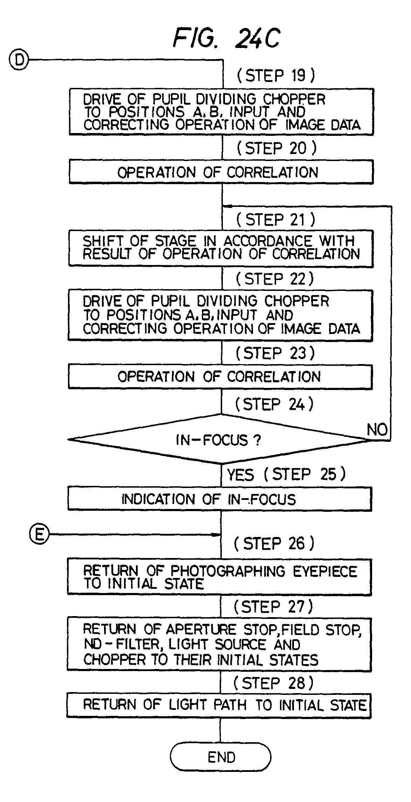

Automatic focussing in the case of the objective SPLAN of 10× is explained with reference to the flow chart in Figure 24.

STEP 1)  First of all, the conditions of the optical system for automatic focussing are set. When the switch button 99 on the operating panel 86 is pushed, by means of the CPU 51, whatever light path may be selected at that time, the states of the respective beam splitters will be memorized in the RAM 52 and the beam splitter 16 (Figure 1) will be driven by the light path switching driving device to form a light path to the image pickup device 61.

STEP 2)  The stop values of the aperture stop 77 and field stop 79, the switched state of the ND-filter unit 81 and the adjusted light state of the light source 83 will be memorized in the RAM 52 and, by use of the stored back-ground data, the aperture stop 77, field stop 79, ND-filter unit 81 and light source 83 will be set so that the projected image on the image pickup device 61 may be optimum. That is to say, dependently on the objective inserted in the light path on the basis of the objective data table 100, the stop diameter of the aperture stop 77 is calculated by CPU 51 and arithmetic unit 55 to be a stop diameter (of 100% on the pupil diameter) obtained when K2=1 in the formula (2), the stop diameter of the field stop 79 is likewise calculated to be a stop diameter (in external contact with the visual field) obtained when K1=1 in the formula (1) and the ND-filter unit 81 and light source 83 are calculated so that the coefficient of 0.707 in

$$L=0.707\times2^{\pm1/2}$$

of the image surface illumination obtained from the formula (4) is made equal to 1, these calculated results then being set by the respective driving devices and light adjusting circuit.

STEP 3) In order to elevate the resolving power of the projected image for the image pickup device 61, the photographic eyepiece 67 is switched to be of a magnification of 5 times.

STEP 4) The settings are confirmed by the CPU 51.

STEP 5) The pupil dividing chopper 85 is moved to the first pupil dividing position (Figure 20A) by the chopper driving device 84 and, at the same time:

STEP 6) The position of the stage 73 is detected.

STEP 7) When the stage 73 is above the standard position 144 then

STEP 8) The image data in the first pupil dividing position is entered into the CPU 51 from the image pickup device 61 and the image data is calculated and processed, the correction coefficients being memorized as the background data in the RAM 52 to obtain $f_A$, which is also memorized in the RAM 52.

STEP 9) The contrast value is calculated as follows, making reference to Figure 25. If the 512 bit sensor forming the image pickup device 61 is divided into five sections a, b, c, d and e, f(x) is made the xth bit signal and x is calculated at intervals of 4 bits, then the contrast C will be represented by

$$C=\Sigma_x \mid f(x)-f(x+5)\mid ,\ (x=4n) \qquad (8)$$

The effect is to calculate the absolute value of the difference of the signals of the sensors in the positions separated respectively by 5 bits. Therefore, the contrast Ca of the section *a* will be

$$Ca=\overset{184}{\underset{x}{\Sigma}}\mid f(x)-f(x+5)\mid ,\ (x=4n)$$

$$=\mid f(64)-f(69)\mid +\mid f(68)-f(73)\mid +$$

$$\ldots+\mid f(184)-f(189)\mid .$$

In the same manner, the contrasts of the other sections are calculated to obtain the entire contrast value.

STEP 10) When the thus obtained contrast value is below a preset threshold value and in the event the movable stage 73 is below the standard position 144;

STEP 11) The stage 73 is moved to the standard position 144 by the stage driving device 72.

STEP 12) Again the image data in the first pupil dividing position is calculated, processed and memorized in the RAM 52.

STEP 13) The contrast value is calculated.

STEP 14) If the contrast value is below the threshold value;

STEP 15) The stage 73 is moved upward by 100 μm (which increment is selected according to the focal depth of the objective being used).

STEPS 16) and 17) After it is confirmed that the instantaneous position of the stage 73 is not the upper limit position 141, the image data in the first pupil position is again calculated, processed and memorized, and the contrast value is calculated. This operation is repeated until the contrast value becomes higher than the threshold value, until;

STEP 18) When the stage 73 reaches the upper limit position 141 in the course. This will be detected by the sensor 145, whereby the above-described operation is interrupted and an out-of-focus condition is indicated on the operation indicating device 64.

Reverting to STEP 10) When the contrast value is higher than the threshold value;

STEP 19) The pupil dividing chopper 85 is moved to the second pupil dividing position (Figure 20B) by the chopper driving device 84 and the image data in that position is entered into the CPU 51 from the image pickup device 61. This image data is calculated, processed with the correction coefficients memorized as background data in the RAM 52 to obtain $f_B$, and then $f_A$ previously memorized in the RAM 52 will be read out.

STEP 20) The correlative calculation shown in the formula (7) will be performed by the arithmetic unit

**0 124 241**

55 to determine δ' (phase difference) giving the minimum value of R(δ) and the amount and direction of the movement of the stage 73 is determined on the basis of this phase difference δ'.

STEP 21)  The stage 73 is moved by the stage driving device 72. However, when as a result the stage 73 reaches to the upper or lower limit positions, the operation is interrupted and an out-of-focus condition is indicated.

STEP 22)  The pupil dividing chopper 85 is then driven again, the image data $f_A$ and $f_B$ respectively in the first pupil dividing position and second pupil dividing position are calculated to determine δ'.

STEP 23)  The minimum value of R(δ) is given by the correlative calculations and the correlative calculation is repeated until δ' becomes 0.

STEP 24)  When δ' becomes 0, in-focus is indicated on the operation indicating device 64.

STEP 25)  After in-focus or out-of-focus is thus indicated, on the basis of the data memorized in the RAM 52 prior to the automatic focussing operation;

STEPS 26) 27) and 28)  The various parts of the optical system of the microscope are returned to the states to which they were set before the automatic focussing, i.e. the optimum condition for observation and/or photography. Thus, the pupil dividing chopper 85 is retracted out of the light path (Figure 20C), the photographic eyepiece 67 is switched to the initial magnification and the aperture stop 77, field stop 79, ND-filter unit and light source 83 are respectively returned to the initial controlled and switched states. Further, the beam splitter 16 is inserted into the light path to form the light path of the photographing system. The automatic focussing operation is thereby completed.

## Claims

1. A microscope having an automatic focussing mechanism, a plurality of interchangeable objectives (8a, 8b, 8c), a memory means (35, 52) having data stored therein relating to the characteristics of the said objectives, an adjustable light source, an adjustable field stop (4), an adjustable aperture stop (5), a plurality of interchangeable condenser lenses (6), a sample stage (7, 73) whose position relative to a selected objective is changeable and whereat a sample is to be illuminated for observation or photographing, a first control means associated with the selected objective for adjusting the light source and the stops and selecting the condenser lens in accordance with the stored data relating to the selected objective in order to provide optimum illumination for observation or photographing, a photo-electric image pickup device (19, 69) for focussing, and a second control means operative for focussing and which, when operated, causes the first control means to operate to re-adjust the optical system, in accordance with the stored data, in order to provide optimum illumination for the purpose of accurate focussing, which optimum illumination is achieved in particular by changing the magnification of the eyepiece to increase the resolving power of the microscope and by adapting the illumination to the dynamic range of the image pick-up, and the first control means restoring the optical system to the adjusted condition for observation or photographing after focussing has been completed.

2. A microscope according to Claim 1 in which said image pick-up device is formed of a photodiode array.

3. A microscope according to Claim 1 in which said image pick-up is a CCD element consisting of a plurality of picture elements, and said microscope further comprises a driving control means (62) for driving said CCD element.

4. A microscope according to any of Claims 1 to 3 comprising a storing means for storing data correcting the inhomogeneity of the illumination on the image pick-up device depending on the illuminating system (1—6) and the optical system (10, 13, 14, 16) selected.

5. A microscope according to Claim 4 in which said storing means stores the image data initially obtained by said image pick-up device with no sample on the stage (7, 73) positioned around in-focus position as reference values, and the image data obtained by said image pick-up device with a sample on the stage positioned for focussing being calculated taking into account these reference values.

6. A microscope according to any of Claims 1 to 5 comprising manual adjusting means (92—95) for changing the automatic setting of the illuminating system by the first control means.

7. A microscope according to any of Claims 1 to 6 comprising sensors (145, 146, 147) capable of detecting different positions of said stage, for example a standard position (144) of said stage being set away from the theoretical in-focus position (143) by a predetermined distance, in the direction away from said objective, the stage being held at said standard position (144) whenever operating instructions for automatic focussing are issued and the stage is in a position different from the standard position in a direction away from said objective, a focussing operation being carried out when said stage reaches said standard position, and focussing being repeated while said stage is repositioned stepwise until the in-focus position is obtained.

8. A microscope according to Claim 7 in which said focussing operation is carried out in two stages, the first stage being based on a comparison of the actual contrast value with a predetermined contrast value, the second stage being based on a comparison of two image portions passing through a chopper blade (135).

9. A microscope according to Claim 7 in which the step distance repositioned by said stage corresponds to the focal depth of the selected objective.

11

10. A microscope according to Claim 7 in which an upper limit position (141) and a lower limit position (142) are provided for the repositioning of said stage including said standard position (144) therebetween, and an indicating device being activated whenever said upper limit position or said lower limit position is detected by said sensors (145, 146).

## Patentansprüche

1. Mikroskop mit automatischer Fokussierung, einer Vielzahl austauschbarer Objektive (8a, 8b, 8c), einer Speichereinrichtung (35, 52) mit darin gespeicherten Daten zu den Merkmalen der Objektive, einer regelbaren Lichtquelle, einer regelbaren Sehfeldblende (4), einer regelbaren Aperturblende (5), einer Vielzahl austauschbarer Kondensoren (6), einem Objektträger (7, 73), dessen Stellung gegenüber dem ausgewählten Objektiv veränderbar ist und auf dem eine Probe zur Betrachtung oder zum Fotografieren beleuchtet wird, einer ersten mit dem gewählten Objektiv in Verbindung stehenden Steuereinrichtung zur Einstellung der Lichtquelle und der Blenden und zur Auswahl der Kondensoren entsprechend den zum ausgewählten Objektiv gespeicherten Daten zur Optimierung der Beleuchtung zur Betrachtung oder zum Fotografieren, einer lichtelektrischen bildaufnehmenden Vorrichtung (19, 69) zur Fokussierung und einer zweiten zur Fokussierung einsetzbaren Steuereinrichtung, durch deren erste Steuereinrichtung in die Lage versetzt wird, das optische System entsprechend den gespeicherten Daten neu einzustellen, um die Beleuchtung für eine genaue Fokussierung zu optimieren, wobei die optimale Beleuchtung insbesondere durch Veränderung der Vergrößerung des Okulars (eyepiece) zur Erhöhung des Auflösungsveromögens des Mikroskops und durch Anpassung der Bleuchtung an den Dynamikbereich des Bildaufnehmers erreicht wird, und die erste Steuereinrichtung das optische System auf den korrigierten Zustand zur Betrachtung und zum Fotografieren nach Beendigung der Fokussierung zurückstellt.

2. Mikroskop nach Anspruch 1, dadurch gekennzeichnet, daß der Bildaufnehmer aus einem Photodiodenfeld besteht.

3. Mikroskop nach Anspruch 1, dadurch gekennzeichnet, daß der Bildaufnahmer ein eine Vielzahl Bildelemente enthaltendes CCD-Element (ladungsgekoppeltes Halbleiterelement) ist und darüber hinaus eine Antriebsregeleinrichtung (62) zum Antrieb des CCD-Elementes aufweist.

4. Mikroskop nach einem der Ansprüche 1 bis 3, dadurch gekennzeichnet, daß es eine Speichereinrichtung zur Speicherung der Daten zur Korrektur einer inhomogenen Beleuchtung der Bildaufnehmer entsprechend dem Beleuchtungssystem (1—6) und dem ausgewählten optischen System (10, 13, 14, 16) aufweist.

5. Mikroskop nach Anspruch 4, dadurch gekennzeichnet, daß die Speichereinrichtung die zunächst über den Bildaufnehmer auf dem etwa in Brennweite entfernten Träger (7, 73) ohne Probe erhaltenen Bilddaten als Bezugswerte speichert und die durch den Bildaufnehmer mit dem zur Fokussierung positionierten Träger mit Probe erhaltenen Bilddaten unter Einbeziehung dieser Bezugswerte errechnet werden.

6. Mikroskop nach einem der Ansprüche 1 bis 5, dadurch gekennzeichnet, daß es eine manuelle Einstelleinrichtung (92—95) zur Veränderung der automatischen Einstellung des Beleuchtungssystems durch die erste Stuereinrichtung aufweist.

7. Mikroskop nach einem der Ansprüche 1 bis 6, dadurch gekennzeichnet, daß Sensoren (145, 146, 147) vorgesehen sind, die in der Lage sind, unterschiedliche Trägerpositionen festzustellen, wie z.B. eine Standardposition (144), in der der Objektträger um einen bestimmten Abstand vom theoretischen Brennpunkt (143) vom Objektiv entfernt wird, wobei der Träger in dieser Standardposition (144) gehalten wird, wenn Bedienungsanweisungen zur automatischen Fokussierung gegeben werden und die Trägerposition von der Standardposition vom Objektiv entfernt abweicht, eine Fokussierung dann ausgeführt wird, wenn der Träger die Standardposition erreicht hat und die Fokussierung wiederholt wird, während der Träger stufenweise neu positioniert wird bis die Brennpunktposition erreicht ist.

8. Mikroskop nach Anspruch 7, dadurch gekennzeichnet, daß die Fokussierung in zwei Stufen ausgeführt wird, von denen in der ersten Stufe zwischen dem Ist-Kontrast und dem Soll-Kontrast und in der zweiten Stufe zwischen zwei durch ein Zahnscheibe (135) (chopper blade) gelangenden Bildteilen verglichen wird.

9. Mikroskop nach Anspruch 7, dadurch gekennzeichnet, daß der von dem Träger umgestellte Stufenabstand der Brennweite des gewählten Objektivs entspricht.

10. Mikroskop nach Anspruch 7, dadurch gekennzeichnet, daß es zur Positionierung des Trägers eine obere Begrenzung (141) und eine untere Begrenzung (142) mit der dazwischen liegenden Standardposition (144) aufweist und daß eine Anzeigevorrichtung vorgesehen ist, die dann einsetzt, wenn die obere Begrenzung oder die untere Begrenzung von den Sensoren (145, 146) erkannt wird.

## Revendications

1. Microscope comprenant un mécanisme automatique de mise au point, un ensemble d'objectifs interchangeables (8a, 8b, 8c), un moyen de mémoire (35, 52) dans lequel sont stockées des données relatives aux caractéristiques desdits objectifs, une source lumineuse réglable, un diaphragme de champ réglable (4), un diaphragme d'ouverture réglable (5), une pluralité de lentilles condenseurs interchangeables (6), une platine à échantillons (7, 73) dont la position par rapport à un objectif sélectionné est modifiable et sur laquelle un échantillon doit être éclairé pour être observé ou photographié, un premier moyen de commande associé à l'objectif sélectionné pour ajuster la source lumineuse et les diaphragmes et sélectionner la lentille du condenseur en fonction des données stockées au sujet de l'objectif sélectionné afin de créer l'éclairage optimal pour l'observation ou la photographie, un dispositif photoélectrique détecteur l'image (19, 69) pour la mise au point, et un second moyen de commande ayant pour objet la mise au point et qui, une fois actionné, déclenche le premier moyen de commande pour réajuster le système optique, en fonction des données mémorisées afin de créer l'éclairage optimal pour une mise au point précise, lequel éclairage optimal est obtenu en particulier en modifiant le grossissement de l'oculaire pour augmenter le pouvoir de résolution du microscope et en adaptant l'éclairage à la gamme dynamique du détecteur d'image, et le premier moyen de commande ramenant le système optique à l'état ajusté pour observer ou photographier lorsque la mise au point est terminée.

2. Microscope selon la revendication 1, dans lequel ledit dispositif détecteur d'image est constitué d'un réseau de photodiodes.

3. Microscope selon la revendication 1, dans lequel ledit détecteur d'image est un élément CCD comprenant une pluralité d'éléments d'image, et ledit microscope comprenant encore un moyen de commande d'entraînement (62) pour entraîner ledit élément CCD.

4. Microscope selon l'une des revendications 1 à 3, comprenant un moyen de stockage pour mémoriser des données corrigeant les défauts d'homogénéité de l'éclairage sur le dispositif détecteur d'image en fonction du système d'éclairage (1—6) et du système optique (10, 13, 14, 16) sélectionné.

5. Microscope selon la revendication 4, dans lequel ledit moyen de stockage mémorise les données d'image obtenues initialement au moyen dudit dispositif détecteur d'image alors qu'il n'y a pas d'échantillons positionnés sur la platine (7, 73) au voisinage de la position de mise au point comme valeur de référence, et les données d'image obtenues par ledit dispositif détecteur d'image lorsqu'un échantillon est positionné sur la platine pour la mise au point étant calculées compte tenu de ces valeurs de référence.

6. Microscope selon l'une quelconque des revendications 1 à 5, comprenant un moyen manuel de réglage (92—95) pour modifier le réglage automatique du système d'éclairage au moyen du premier moyen de commande.

7. Microscope selon l'une quelconque des revendications 1 à 6, comprenant des capteurs (145, 146, 147) capables de détecter différentes positions de ladite platine, par exemple une position standard (144) de ladite platine étant fixée à une distance prédéterminée de la position théorique de mise au point (143), dans la direction qui l'éloigne dudit objectif, la platine étant maintenue dans ladite position standard (144) à chaque fois que les instructions fonctionnelles de mise au point automatique sont délivrées et que la platine se trouve dans une position différente de la position standard dans une direction qui l'éloigne dudit objectif, une opération de mise au point étant effectuée lorsque ladite platine atteint ladite position standard, et la mise au point étant répétée jusqu'à ce que ladite platine soit à nouveau positionnée pas à pas jusqu'à ce que la position de mise au point soit obtenue.

8. Microscope selon la revendication 7, dans lequel ladite opération de mise au point est effectuée en deux étapes, la première étant basée sur une comparaison entre la valeur réelle de contraste et une valeur prédéterminée de contraste, la seconde étape étant basée sur une comparaison de deux parties d'image passant par une lame de découpage (135).

9. Microscope selon la revendication 7, dans lequel la distance unitaire remise en place par ladite platine correspond à la distance focale de l'objectif sélectionné.

10. Microscope selon la revendication 7, dans lequel une position limite supérieure (141) et une position limite inférieure (142) sont prévues pour le repositionnement de ladite platine comprenant ladite position standard (144) entre elles, et un dispositif indicateur étant actionné à chaque fois que ladite position limite supérieure ou ladite position limite inférieure est détectée par lesdits capteurs (145, 146).

# FIG. 1

FIG. 2

| | |
|---|---|
| 19 | IMAGE SIGNAL PROCESSING CIRCUIT — 21 |
| 16, 17 | DRIVING CIRCUIT FOR SHUTTER AND FILM WINDING — 22 |
| 14, 15 | LIGHT MEASURING CIRCUIT — 23 |
| 13 | SWITCHING DRIVING DEVICE FOR PHOTOGRAPHING EYEPIECE — 24 |
| 10 (11) | LIGHT PATH SWITCHING DRIVING DEVICE — 25 |
| 8 | SWITCHING DRIVING DEVICE FOR OBJECTIVE — 26 |
| 7 | DRIVING DEVICE FOR FOCUSING STAGE — 27 |
| 6 | SWITCHING DRIVING DEVICE FOR CONDENSER LENS — 28 |
| 5, 4 | CONTROLLING DRIVING DEVICE FOR FIELD AND APERTURE STOPS — 29 |
| 3 | SWITCHING DRIVING DEVICE FOR ND-FILTER — 30 |
| 2, 1 | LIGHT SOURCE LIGHT ADJUSTING DEVICE — 31 |

AUTOMATIC EXPOSURE OPERATION CONTROLLING DEVICE — 33

PHOTOGRAPHING OPERATION INDICATING DEVICE — 34

MEMORY — 35

CPU — 32

OPERATION INDICATING DEVICE — 36

0 124 241

## FIG. 3

0 124 241

## FIG. 4

## FIG. 5

| REVOLVER POSITION | | 1 | 2 | 3 | 4 | 5 | 6 |
|---|---|---|---|---|---|---|---|
| OBJECTIVE | MAGNIFI-CATION | a | b | c | d | e | f |
| | KIND | A | B | C | D | E | F |

4

## FIG. 6

| | OBJECTIVE | | | CONDENSER LENS | |
| | NA VALUE | | | | |
| KIND<br>MAGNIFICATION | SPLAN<br>APO | SPLAN | DPLAN | FOCAL<br>DISTANCE | FS<br>PROJECTION<br>MAGNIFICA-<br>TION |
|---|---|---|---|---|---|
| 1 x | ———— | 0.04 | ———— | 61.5 | 0.68 |
| 2 x | ———— | 0.08 | ———— | | |
| 4 x | 0.16 | 0.13 | 0.10 | | |
| 10 x | 0.40 | 0.30 | 0.25 | 12 | 0.133 |
| 20 x | 0.70 | 0.46 | 0.40 | | |
| 40 x | 0.95 | 0.70 | 0.65 | 6.5 | 0.0722 |
| 100 x | 1.40 | 1.25 | 1.25 | | |

## FIG. 7

| LIGHT PATH | F No. (VISUAL FIELD NUMBER) |
|---|---|
| Bi | 28 |
| FK 2.5 x | 24 |
| 3.3 x | 18 |
| 4 x | 15 |
| 5 x | 12.3 |

5

FIG. 8

## FIG. 9A

## FIG. 9B

# FIG. 10

| LIGHT AMOUNT RATIO | ND 0 (1/2 FILTER) | ND 1 (1/4 FILTER) | ND 2 (1/8 FILTER) | ND 3 (1/16 FILTER) |
|---|---|---|---|---|
| 1 | | | | |
| 1 / 2 | ○ | | | |
| 1 / 4 | | ○ | | |
| 1 / 8 | ○ | ○ | | |
| 1 / 16 | ○ | | ○ | |
| 1 / 32 | ○ | | | ○ |
| 1 / 64 | ○ | ○ | ○ | |
| 1 / 128 | ○ | ○ | | ○ |
| 1 / 256 | ○ | | ○ | ○ |
| 1 / 512 | | ○ | ○ | ○ |
| 1 / 1024 | ○ | ○ | ○ | ○ |

○ : INSERTED

## FIG. 11

| LIGHT PATH | Bi | $\log_a Bi$ |
|---|---|---|
| Bi 100 % | 1 | 0 |
| Bi 20 % | 0.2 | -9 |
| FK 2.5 x | 0.148 | -11 |
| 3.3 x | 0.0847 | -14 |
| 4 x | 0.0589 | -16 |
| 5 x | 0.0371 | -19 |

## FIG. 12

| MAGNIFI-CATION | $\log_a Ob$ | | |
|---|---|---|---|
| | SPLAN APO | SPLAN | DPLAN |
| 1 x | —— | 3 | —— |
| 2 | —— | 3 | —— |
| 4 | 2 | 0 | -2 |
| 10 | 2 | 0 | -3 |
| 20 | -1 | -4 | -6 |
| 40 | -5 | -7 | -8 |
| 100 | -15 | -15 | -15 |

## FIG. 13

| ND | $\log_a$ ND | | |
|---|---|---|---|
| 1 | | $\geqq \log_a$ ND | $> -2$ |
| 1/2 | $-2 \geqq$ | 〃 | $> -6$ |
| 1/4 | $-6 \geqq$ | 〃 | $> -10$ |
| 1/8 | $-10 \geqq$ | 〃 | $> -14$ |
| 1/16 | $-14 \geqq$ | 〃 | $> -18$ |
| 1/32 | $-18 \geqq$ | 〃 | $> -22$ |
| 1/64 | $-22 \geqq$ | 〃 | $> -26$ |
| 1/128 | $-26 \geqq$ | 〃 | $> -30$ |
| 1/256 | $-30 \geqq$ | 〃 | $> -34$ |
| 1/512 | $-34 \geqq$ | 〃 | $> -38$ |
| 1/1024 | $-38 \geqq$ | 〃 | |

## FIG. 14

## FIG. 15

*FIG. 16*

( DATA SET )

/ SELECTION OF MAGNIFICATION, KIND -DATA OF OBJECTIVE /

/ DATA SETTING SWITCH ON /

INPUT OF REVOLVER POSITION

DATA SET TO RAM TABLE IN AC-CORDANCE WITH REVOLVER POSI-TION

DRIVE OF CONDENSER LENS IN ACCORDANCE WITH MAGNIFICATION OF OBJECTIVE

OPERATION AND STORAGE OF ND FILTER, RESPECTIVE STOPS -VALUES FROM OBJECTIVE DATA

INPUT OF CORRECTING DATA FOR AUTOMATIC FOCUSING

DRIVE OF ND - FILTER

DRIVE OF FIELD STOP

DRIVE OF APERTURE STOP

( END )

12

## FIG. 17

IMAGE PICK-UP DEVICE 61 → AMP 130 → SAMPLE HOLDING CIRCUIT 131 → A/D CONVERTER 63 → I/O PORT 60

REVOLVER 71 → OBJECTIVE SWITCHING DRIVING DEVICE 70

FOCUSING STAGE 73 → FOCUSING DRIVING DEVICE 72

APERTURE STOP 77 → CONTROLLING DRIVING DEVICE FOR APERTURE STOP 76

ND FILTER 81 → CONTROLLING DRIVING DEVICE FOR ND FILTER 80

LIGHT SOURCE 83 → LIGHT SOURCE LIGHT ADJUSTING DEVICE 82

PUPIL DIVIDING CHOPPER 85 → DRIVING DEVICE FOR PUPIL DIVIDING CHOPPER 84

CPU 51

RAM 52

ARITHMETIC UNIT 55

FIG. 18A

FIG. 18B

FIG. 19A

FIG. 19B

## FIG. 20A

137
135a
135
136

## FIG. 20B

137
135a
135
136

## FIG. 20C

137
135a
135
136

## FIG. 21

ELECTRIC CHARGE OUTPUT

INCIDENT LIGHT AMOUNT
(ft-cd-s)

## FIG. 23

140
141
143
144
73a
73b
73
72
145
147
146
142

## FIG. 25

a
c
e
64     192     320     448
0     128     256     348     511 (BITS)
b
d

# FIG. 22

| FIG. 22A |
| FIG. 22B |

# FIG. 22A

( INPUT OF BACK GROUND DATA )

SHIFT OF STAGE TO STANDARD POSITION

SWITCHING OF LIGHT PATH

DETECTION OF REVOLVER POSITION

SET OF APERTURE STOP AND FIELD STOP IN ACCORDANCE WITH OBJECTIVE DATA

SET OF LIGHT SOURCE AND ND–FILTER IN ACCORDANCE WITH OBJECTIVE DATA

SWITCHING TO 5X PHOTOGRAPHING EYEPIECE

SET OF CHARGE ACCUMULATION TIME OF IMAGE PICK-UP DEVICE IN ACCORDANCE WITH OBJECTIVE DATA

NO — COMPLETION OF SETTING OF RESPECTIVE ELEMENTS ?

YES

DRIVE OF PUPIL DIVIDING CHOPPER TO POSITION A

Ⓐ

## FIG. 22B

(A)

```
┌─────────────────────────────────┐
│      INPUT OF IMAGE DATA         │
└─────────────────────────────────┘
                 │
                 ▼
┌─────────────────────────────────┐
│   CALCULATION AND STORAGE        │
│   OF CORRECTING COEFFICIENT      │
└─────────────────────────────────┘
                 │
                 ▼
┌─────────────────────────────────┐
│   DRIVE OF PUPIL DIVIDING        │
│   CHOPPER TO POSITION B          │
└─────────────────────────────────┘
                 │
                 ▼
┌─────────────────────────────────┐
│      INPUT OF IMAGE DATA         │
└─────────────────────────────────┘
                 │
                 ▼
┌─────────────────────────────────┐
│   CALCULATION AND STORAGE        │
│   OF CORRECTING COEFFICIENT      │
└─────────────────────────────────┘
                 │
                 ▼
┌─────────────────────────────────┐
│   RETURN OF PHOTOGRAPHING        │
│   EYEPIECE TO INITIAL STATE      │
└─────────────────────────────────┘
                 │
                 ▼
┌─────────────────────────────────┐
│   RETURN OF LIGHT SOURCE         │
│   ND-FILTER TO INITIAL STATES    │
└─────────────────────────────────┘
                 │
                 ▼
┌─────────────────────────────────┐
│   RETURN OF APERTURE STOP,       │
│   FIELD STOP TO INITIAL STATES   │
└─────────────────────────────────┘
                 │
                 ▼
┌─────────────────────────────────┐
│   RETURN OF LIGHT PATH           │
│   TO INITIAL STATE               │
└─────────────────────────────────┘
                 │
                 ▼
┌─────────────────────────────────┐
│   RETREAT OF PUPIL DIVIDING      │
│   CHOPPER OUT OF LIGHT PATH      │
└─────────────────────────────────┘
                 │
                 ▼
            (  END  )
```

## FIG. 24     FIG. 24A

| FIG. 24B | FIG. 24A | FIG. 24C |
|---|---|---|

(D)

START

(STEP 1)
SWITCHING OVER OF LIGHT PATH TO IMAGE PICK-UP DEVICE

(A)

(STEP 2)
ADJUSTMENT OF APERTURE STOP, FIELD STOP, NO-FILTER, LIGHT SOURCE AND SENSITIVITY OF IMAGE PICK-UP DEVICE

(STEP 3)
SWITCHING OVER TO 5X PHOTOGRAPHING EYEPIECE

(STEP 4)
NO — HAS SETTING OF RESPECTIVE ELEMENTS COMPLETED?

(B)

YES (STEP 5)
DRIVE OF PUPIL DIVIDING CHOPPER TO POSITION A

(STEP 6)
DETECTION OF STAGE POSITION

(STEP 7)
NO — IS STAGE OVER STANDARD POSITON?

(E)

YES (STEP 8)
INPUT AND CORRECTING OPERATION OF IMAGE DATA

(STEP 9)
OPERATION OF CONTRAST VALUE

(STEP 10)
NO — CONTRAST OK?

YES

(C)

18

# 0 124 241

## FIG. 24B

Ⓐ

(STEP 11)

SHIFT OF STAGE TO
STANDARD POSITION

(STEP 12)

INPUT AND CORRECTING
OPERATION OF IMAGE
DATA

(STEP 13)

OPERATION OF
CONTRAST VALUE

(STEP 14)

CONTRAST OK ?  —— YES Ⓑ

NO (STEP 15)

UPWARD SHIFT OF
STAGE BY 100μm

(STEP 16)

DETECTION OF STAGE
POSITION

(STEP 17)

NO —— IS IT UPPER LIMIT
POSITION OF
STAGE ?

YES (STEP 18)

INDICATION OF
OUT-OF-FOCUS

Ⓒ

19

# FIG. 24C

Ⓓ ──────── (STEP 19)

DRIVE OF PUPIL DIVIDING CHOPPER TO POSITIONS A.B. INPUT AND CORRECTING OPERATION OF IMAGE DATA

(STEP 20)

OPERATION OF CORRELATION

(STEP 21)

SHIFT OF STAGE IN ACCORDANCE WITH RESULT OF OPERATION OF CORRELATION

(STEP 22)

DRIVE OF PUPIL DIVIDING CHOPPER TO POSITIONS A.B. INPUT AND CORRECTING OPERATION OF IMAGE DATA

(STEP 23)

OPERATION OF CORRELATION

(STEP 24)

IN-FOCUS ?          NO

YES (STEP 25)

INDICATION OF IN-FOCUS

Ⓔ ──────── (STEP 26)

RETURN OF PHOTOGRAPHING EYEPIECE TO INITIAL STATE

(STEP 27)

RETURN OF APERTURE STOP, FIELD STOP, ND-FILTER, LIGHT SOURCE AND CHOPPER TO THEIR INITIAL STATES

(STEP 28)

RETURN OF LIGHT PATH TO INITIAL STATE

( END )